# EUROPÄISCHE PATENTSCHRIFT

(11) **EP 0 779 457 B1**
(45) Veröffentlichungstag und Bekanntmachung des Hinweises auf die Patenterteilung: **02.05.2002**
(21) Anmeldenummer: 96120133.2
(22) Anmeldetag: 14.12.1996
(51) Int. Cl.: F16J 15/34

(54) **Gleitringdichtung**
Mechanical seal
Joint mécanique

(30) Priorität: 15.12.1995 DE 19546825
(43) Veröffentlichungstag der Anmeldung: 18.06.1997
(73) Patentinhaber: Federal-Mogul Burscheid GmbH, 51399 Burscheid (DE)
(72) Erfinder: Göbbels, Franz-Jozef, Dipl.-Ing., 51399 Burscheid (DE)

(56) Entgegenhaltungen:
- EP-A- 0 597 615
- DE-A- 1 919 666
- DE-A- 3 014 866
- US-A- 3 608 054
- US-A- 3 767 214
- US-A- 4 336 944

## Beschreibung

Die Erfindung betrifft eine Gleitringdichtung, bestehend aus einem Gleit- und/oder Gegenring aus metallischem Werkstoff, mit einer zur Aufnahme eines ringförmigen elastischen Rollkörpers bestimmten kegeligen Umfangsfläche.

Gattungsgemäße Gleitringdichtungen werden vorzugsweise in Laufwerke von Gleiskettenfahrzeugen oder Baumaschinen eingesetzt. Während des Betriebes sind die Gleitringdichtungen hohem Verschleiß durch vor allem Staub, Sand, Schlamm und Erdreich ausgesetzt. Vor allem die Lager der Stütz-, Lauf- und Umlenkrollen und die Naben und Achsen bei Räderlaufwerken werden mit Gleitringen abgedichtet. Entsprechend der starken abrasiven und korrosiven Belastung im Betrieb werden entsprechend verschleißbeständige Werkstoffe verwendet. Dies sind in erster Linie harte Gußwerkstoffe aus Stelliten und nickelhaltigen ledeburitisch erstarrten weißen Gußeisenlegierungen. Da Stellite und hochnickelhaltige Gußeisenlegierungen darüber hinaus hohe Anteile an teuren Nichteisenmetallegierungszusätzen aufweisen, ergeben sich hohe Herstellkosten.

Eine Gleitringdichtung aus hartem, abriebfestem Gußeisen ist aus DE 30 14 866 A1 beschrieben.

Der Erfindung liegt die Aufgabe zugrunde, eine gattungsgemäße Gleitringdichtung zu schaffen, deren Gleitringe aus einem einfach zu bearbeitenden Gußwerkstoff ohne teure Legierungszusätze bestehen, die aber gleichzeitig eine hohe Beständigkeit gegenüber korrosivem Verschleiß besitzen.

Diese Aufgabe wird erfindungsgemäß durch die kennzeichnenden Merkmale des Anspruchs 1 gelöst. Eine vorteilhafte Ausgestaltung ergibt sich aus dem Unteranspruch.

Der erfindungsgemäße Pulverlack erzeugt einen laugen- und säurebeständigen Korrosionsschutz am äußeren Profil der Gleitringdichtung. Es wird nunmehr der Einsatz von gattungsgemäßen Gleitringen auch in Anwendungsgebieten möglich, die bisher nur mit aufwendigen Abdichtmitteln, wie zum Beispiel Balgendichtungen, abgedichtet wurden.

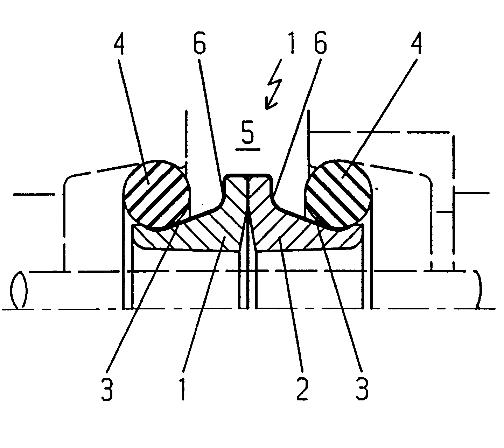

Die in der Figur dargestellte Gleitringdichtung (1) besteht aus einem Gleit- und einem Gegenring (1, 2), die axial gegeneinander gerichtet sind und identisch ausgebildet sind. Der Gleit- und Gegenring (1, 2) weist an seinem Außenumfang eine kegelige Umfangsfläche (3) auf. Auf der Umfangsfläche (3) erstreckt sich ein elastischer Rollkörper (4). Auf der dem abzudichtenden Medium (5) zugekehrten Mantelfläche ist eine Beschichtung (6) vorgesehen. Bei der Beschichtung handelt es sich um einen Pulverlack, der mit einer handelsüblichen Pulverbeschichtungsanlage (nicht dargestellt) durch Hochspannung elektrostatisch aufgebracht ist und durch Einbrennen bei Temperaturen zwischen 170 °C bis 220 °C gehärtet wurde.

## Patentansprüche

1. Gleitringdichtung, insbesondere Laufwerkdichtung, bestehend aus einem Gleit- und/oder Gegenring aus metallischem Werkstoff, mit einer zur Aufnahme eines ringförmigen elastischen Rollkörpers bestimmten kegeligen Umfangsfläche, **dadurch gekennzeichnet, daß** die dem abzudichtenden Medium (5) zugekehrte Mantelfläche des Gleit- und/oder Gegenringes (1, 2) mit einem Pulverlack (6) auf Polyester/Polyepoxid-Basis beschichtet ist, der bei einer Temperatur zwischen 170 bis 220 °C vernetzt ist.

2. Gleitringdichtung nach Anspruch 1, **dadurch gekennzeichnet, daß** die Schichtdicke im Bereich von 40 - 90 µm liegt.

## Claims

1. Mechanical seal, especially a drive seal, comprising a slip and/or support ring formed from metallic material and with a tapered peripheral surface intended to accommodate an annular resilient rolling body, **characterised in that** the cover surface, facing the medium (5) to be sealed, of the slip and/or support ring (1, 2) is coated with a powder lacquer (6) with a polyester/polyepoxide base and which is cured at a temperature of between 170 and 220°C.

2. Mechanical seal according to claim 1, **characterised in that** the coating thickness is in the region of 40 to 90 mm.

## Revendications

1. Joint mécanique, et plus particulièrement joint de roulement, composé d'une bague de friction et/ou d'opposition conçue à partir d'un matériau métallique, doté d'une surface périphérique conique destinée à recevoir un organe de roulement élastique et **caractérisé en ce que** la surface latérale de la bague de friction et/ou d'opposition (1, 2) orientée vers l'agent de recouvrement (5) est recouverte d'une laque en poudre (6) sur base polyester / polyépoxy, réticulée à une température de 170 à 220°C.

2. Joint mécanique selon la revendication 1, **caractérisé en ce que** l'épaisseur de couche est de 40 à 90 µm.
